# EUROPÄISCHE PATENTSCHRIFT

(11) **EP 2 875 759 B1**
(45) Veröffentlichungstag und Bekanntmachung des Hinweises auf die Patenterteilung: **19.06.2019**
(21) Anmeldenummer: 14192105.6
(22) Anmeldetag: 06.11.2014
(51) Int. Cl.: A47J 31/36, A47J 31/44

(54) **Kaffeeautomat**
Coffee machine
Automate à café

(30) Priorität: 20.11.2013 DE 102013223658
(43) Veröffentlichungstag der Anmeldung: 27.05.2015
(73) Patentinhaber: BSH Hausgeräte GmbH, 81739 München (DE)
(72) Erfinder: Daburger, Josef, 83313 Siegsdorf-Hammer (DE); Höglauer, Michael, 83246 Unterwössen (DE); Steffl, Michael, 83250 Marquartstein (DE)

(56) Entgegenhaltungen:
- EP-A1- 2 335 529
- WO-A1-2004/098360
- WO-A1-2005/016095
- WO-A1-2012/010317
- DE-U1-202007 002 910

## Beschreibung

Die vorliegende Erfindung betrifft einen Kaffeeautomaten mit einem Brühkopf zur Aufnahme eines Pads oder einer Kapsel gemäß dem Oberbegriff des Anspruchs 1. Die Erfindung betrifft außerdem eine Dampfdüse für einen derartigen Kaffeeautomaten.

Gattungsgemäße Kaffeeautomaten, welche üblicherweise auch als sogenannte Kapselautomaten bezeichnet werden, erfreuen sich zunehmender Beliebtheit, da der portionierte Kaffee stets gekapselt und damit frisch für den jeweiligen Brühvorgang zur Verfügung steht. Im Vergleich zu herkömmlichen Kaffeemaschinen, bei welchen Kaffeepulver eingefüllt wird, bieten derartige Kapsel- oder Padmaschinen auch den großen Vorteil, dass der vorportionierte und abgepackte Kaffee eine gleichbleibend hohe Qualität aufweist. Von besonderem Vorteil ist darüber hinaus, dass der in derartigen Pads bzw. Kapseln eingeschlossene Kaffee vergleichsweise lang lagerbar ist, ohne an Qualität zu verlieren.

Aus der WO 2005/016095 A1 ist ein Getränkebereiter bekannt, bei dem ein Getränk aus einer Brühkammer in eine Schäumeinrichtung geleitet wird. Die Brühkammer kann dazu Pads mit beispielsweise gemahlenem Kaffee aufnehmen. Das Getränk kann nach der Schaumerzeugung in der Schäumeinrichtung in einer Beruhigungskammer beruhigt und über eine Auslassöffnung und einen Auslass ausgegeben werden.

Die EP 2 335 529 A1 offenbart eine Vorrichtung zur Zubereitung eines Getränks aus einer Portionsverpackung in einer Brühkammer. Die Brühkammer weist dazu zwei gegeneinander pressbare Brühkammerteile, eine Eintrittsöffnung und eine Austrittsöffnung für ein flüssiges Medium auf. Die Austrittsöffnung führt zu einem Getränkeauslass. Die Brühkammer weist zusätzlich einen Drainage-Kanal auf, der von der Kammerinnenseite zur Kammeraußenseite führt.

Aus der WO 2012/010317 A1 ist eine Portionskapsel zur Zubereitung von Lebensmitteln oder Getränken wie Heißgetränken bekannt, die über eine Kennung verfügt. Die Kennung ermöglicht es, die Portionskapsel oder eine Gruppe von Portionskapseln zu individualisieren. Über die Kennung kann die Gruppe von Portionskapseln von einem Sensor eines Kaffeeautomaten erkannt werden.

Aus der WO 2004/098360 A1 ist ein Kaffeeautomat mit einem Brühkopf bekannt, in den ein kapselförmiger Grundkörper mit einem nach außen geführten Rohr einlegbar ist.

Da zunehmend auch Kaffeemischgetränke, wie beispielsweise Cappuccinos, in den Fokus des Verbrauchers rücken, sind bereits eine Vielzahl von Kaffeeautomaten mit separaten Dampfdüsen bzw. Milchschäumern ausgerüstet. Nachteilig hierbei ist jedoch, dass derartige separate Milchschäumer bzw. Dampfdüsen zusätzlichen Bauraum erfordern und zudem permanent vorhanden sind, das heißt unabhängig davon, ob der Verbraucher die Dampfdüse tatsächlich nutzt oder nicht.

Aus der DE 20 2007 002910 U1 ist zudem ein Getränkezubereitungsgerät bekannt, das über eine Brüheinheit verfügt, die eine erste Kammer und einen ersten Auslauf zur Zubereitung und Ausgabe von z.B. Kaffee und eine zweite Kammer und einen zweiten Auslauf zur Zubereitung und Ausgabe eines Milchprodukts aufweist.

Selbstverständlich sind auch abnehmbare Dampfdüsen bzw. abnehmbare Milchschäumer bekannt, die an einer separaten Andockstation des Kaffeeautomaten angedockt werden können. Hierfür ist jedoch wiederum die separate Andockstation am Kaffeeautomaten erforderlich, was ebenfalls Bauraum sowie eine spezielle Leitungsführung zur Andockstation erfordert.

Die vorliegende Erfindung beschäftigt sich daher mit dem Problem, für einen Kaffeeautomaten der gattungsgemäßen Art eine verbesserte Ausführungsform anzugeben, die sich durch einen reduzierten Bauraumbedarf und durch ein besonders einfaches Handling auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einem an sich bekannten Kaffeeautomaten mit einem Brühkopf zur Aufnahme eines Pads oder einer Kapsel, eine in diesen Brühkopf einlegbare Dampfdüse vorzusehen, die beispielsweise zum Erzeugen von Dampf und zum Aufschäumen von Milch genutzt werden kann und die lediglich dann am Kaffeeautomaten, das heißt konkret im Brühkopf desselben, montiert wird, sofern sie auch tatsächlich benötigt wird. Der Brühkopf kann dabei in gewohnter Weise zum Einlegen bzw. zur Entnahme des Pads bzw. der Kaffeekapsel geöffnet werden und weist eine Auslauföffnung zur Ausgabe von Kaffee auf. Die Dampfdüse wiederum besitzt einen pad- oder kapselförmigen Grundkörper, mit welchem sie ähnlich wie ein Pad oder eine Kapsel in den geöffneten Brühkopf eingelegt werden kann, so dass sich die Benutzung der Dampfdüse im Wesentlichen nicht von dem Einlegen bzw. Entfernen eines Pads bzw. einer Kapsel in dem Brühkopf unterscheidet. Die in den Brühkopf einlegbare erfindungsgemäße Dampfdüse weist darüber hinaus ein Dampfrohr auf, welches bei geschlossenem Brühkopf und darin eingelegter Dampfdüse über die Auslauföffnung nach außen geführt ist und beispielsweise in einen Behälter mit Milch hineinragt, um dort Milch aufzuschäumen. Der erfindungsgemäße Kaffeeautomat erfordert somit einen vergleichsweise geringen Bauraum und ermöglicht trotzdem das Herstellen allzeit beliebter Kaffeemischgetränke, wie beispielsweise Cappuccino. Das Herstellen von Milchschaum ist dabei denkbar einfach, da hierfür lediglich anstelle einer Kaffeekapsel bzw. eines Kaffeepads die erfindungsgemäße Dampfdüse in den Brühkopf des Kaffeeautomaten eingelegt werden muss. Die Dampferzeugung wird dabei über das bekannte User-Interface gesteuert, beispielsweise über eine Start-/Stopp-Taste, wobei die Heizenergie zur Dampferzeugung über das Heizsystem des Kaffeeautomaten geliefert wird. Nach Gebrauch kann die Dampfdüse entweder am Kaffeeautomaten zur Aufbewahrung befestigt oder in diesem verstaut werden. Auch eine Reinigung der Dampfdüse ist dabei vergleichsweise einfach möglich, da diese durch ein einfaches Öffnen des Brühkopfs leicht aus diesem entnommen und beispielsweise gespült werden kann. Wird über den Kaffeeautomat lediglich die Ausgabe von normalem Kaffee oder Espresso gewünscht, so wird die Dampfdüse einfach aus dem Brühkopf entnommen und anstelle dieser ein üblicher Kaffeepad bzw. eine übliche Kaffeekapsel in den Brühkopf eingelegt.

Erfindungsgemäß ist am Ende des Dampfrohrs eine Schaumdüse befestigt, die ein Aufschäumen von Milch erleichtert.

Bei einer zweckmäßigen Ausführungsform der erfindungsgemäßen Lösung ist das Dampfrohr drehbar und insbesondere abnehmbar am Grundkörper der Dampfdüse angeordnet. Das Dampfrohr kann dabei ein starres Rohr im eigentlichen Sinne oder aber auch eine flexible, schlauchartige Leitung sein. Durch die Möglichkeit des Abnehmens des Dampfrohres vom Grundkörper der Dampfdüse können beide Teile vergleichsweise einfach separat gereinigt werden, wodurch hohe hygienische Standards gewährleistet werden können.

Bei einer weiteren vorteilhaften Ausführungsform der erfindungsgemäßen Lösung weist der Grundkörper der Dampfdüse zu einem Pad oder einer Kapsel äquivalente Kontaktflächen auf, die mit entsprechenden Dichtungskonturen im Brühkopf zusammenwirken. Grundgedanke hierbei ist, dass der Grundkörper der Dampfdüse eine zum Kaffeepad bzw. zur Kaffeekapsel äquivalente Gestalt aufweist, die ein zum Einlegen einer Kapsel oder eines Pads äquivalentes einfaches Einlegen der Dampfdüse in den Brühkopf ermöglichen. Auch das Bedienen der Dampfdüse ist dabei denkbar einfach, da dieser dicht im Brühkopf verriegelt wird, sofern der Brühkopf geschlossen wird. Der Grundkörper kann beispielsweise aus Kunststoff ausgebildet sein, ebenso wie das Dampfrohr, wobei letzteres selbstverständlich auch aus Metall ausgebildet sein kann.

Zweckmäßig ist eine Erfassungseinrichtung vorgesehen, über welche die Anwesenheit der Dampfdüse im Brühkopf erfassbar ist. Die Erfassungseinrichtung ermöglicht dabei ein sofortiges und unzweideutiges Erkennen der Dampfdüse im Brühkopf und ist darüber hinaus beispielsweise in der Lage, ein entsprechendes Signal an eine Steuerungseinrichtung des Kaffeeautomaten zu übermitteln. Dieser kann daraufhin beispielsweise einen entsprechenden Dampfmodus fahren. Die Erfassungseinrichtung kann beispielsweise als Barcodeleser, als Mikroschalter oder als RFID-Scanner ausgebildet sein, wobei an der Dampfdüse entsprechend ein Barcode, ein RFID-Chip oder ähnliches angeordnet ist. Wichtig ist hierbei lediglich ein einwandfreies und eindeutiges Zusammenwirken des an der Dampfdüse angeordneten Teils der im Brühkopf angeordneten Erfassungseinrichtung. Beispielsweise ist auch denkbar, dass im Brühkopf ein Mikroschalter angeordnet ist, der über eine entsprechende am Grundkörper angeordnete Kontur beim Schließen des Brühkopfes und eingelegter Dampfdüse niedergedrückt und damit geschaltet wird. Die Erfassungseinrichtung soll das Vorhandensein der Dampfdüse im Brühkopf einwandfrei detektieren können.

Die Erfindung beruht weiter auf dem allgemeinen Gedanken, eine Dampfdüse für einen zuvor beschriebenen Kaffeeautomaten herzustellen, wobei die Dampfdüse einen pad- oder kapselförmigen Grundkörper sowie ein drehbar daran angeschlossenes und abnehmbares Dampfrohr umfasst. Eine derartige Dampfdüse kann somit beispielsweise auch über den Zubehörhandel vertrieben werden, da die Dampfdüse je nach Ausführungsform auch bei herkömmlichen Kaffeeautomaten einsetzbar ist. Wichtig hierbei ist lediglich, dass die Dampfdüse bei einem in dem Brühkopf eingelegten Zustand fluidisch mit einer entsprechenden Dampfleitung des Brühkopfes verbunden ist. Dies lässt sich jedoch durch eine entsprechende Ausbildung des Grundkörpers einfach realisieren. Erfindungsgemäß ist am Ende des Dampfrohrs eine Schaumdüse befestigt, die ein Aufschäumen von Milch erleichtert. Die Dampfdüse kann dabei zu einem Pad oder einer Kapsel äquivalente Kontaktflächen besitzen, welche es ermöglichen, die Dampfdüse in den Brühkopf des Kaffeeautomaten einzulegen und beim Schließen des Brühkopfes dicht in diesem zu fixieren. Darüber hinaus kann am Grundkörper bzw. generell an der Dampfdüse ein Barcode, ein RFID-Chip oder eine Betätigungskontur angeordnet sein, die mit einer Erfassungseinrichtung im Kaffeeautomaten zusammenwirkt und das Vorhandensein der Dampfdüse im Brühkopf zweifelsfrei erkennt. Der Grundkörper der Dampfdüse kann dabei beispielsweise aus Kunststoff ausgebildet sein, ebenso wie das Dampfrohr, wobei auch eine Ausführungsform des Dampfrohres in Metall denkbar ist, so dass die Dampfdüse generell vergleichsweise kostengünstig herstellbar ist.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: einen Brühkopf eines Kaffeeautomaten mit einer erfindungsgemäß darin angeordneten Dampfdüse,
- Fig. 2: eine Schnittdarstellung durch den Brühkopf des Kaffeeautomaten mit eingelegter Dampfdüse.

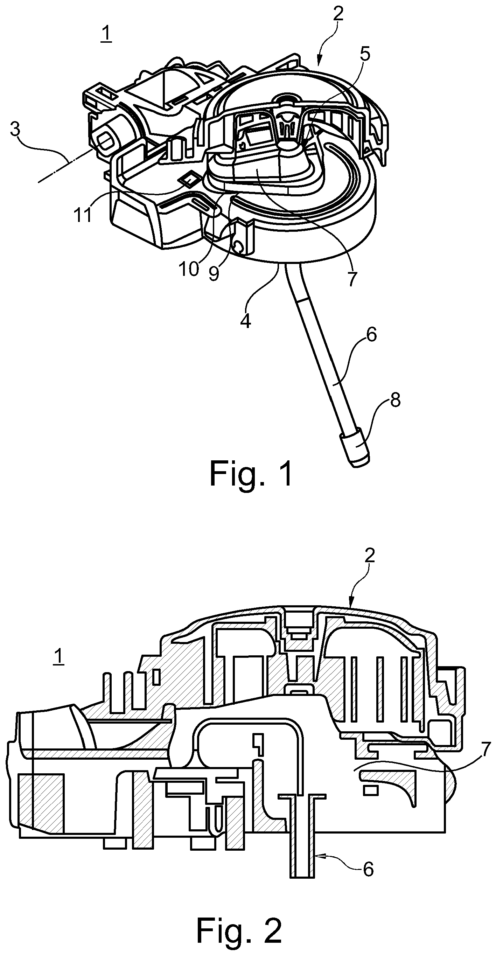

Entsprechend den Figuren 1 und 2 weist ein Kaffeeautomat 1 einen Brühkopf 2 auf, welcher üblicherweise zur Aufnahme eines Pads oder einer Kaffeekapsel ausgebildet ist. Der Brühkopf 2 kann dabei geöffnet werden, beispielsweise mittels einer Schwenkbewegung um eine Schwenkachse 3 und besitzt darüber hinaus eine Auslauföffnung 4 (vergleiche Figur 2), über welche Kaffee ausgegeben werden kann. Erfindungsgemäß ist nun eine in den Brühkopf 2 einlegbare Dampfdüse 5 mit einem Dampfrohr 6 vorgesehen, wobei die Dampfdüse 5 einen pad- oder kapselförmigen Grundkörper 7 besitzt, mit welchem sie in der Art eines Pads bzw. einer Kapsel in den Brühkopf 2 eingelegt werden kann und wobei bei geschlossenem Brühkopf 2 das Dampfrohr 6 der Dampfdüse 5 über die Auslauföffnung 4 nach außen geführt ist und beispielsweise in einen Behälter mit Milch zum Aufschäumen eingesteckt werden kann.

Am freien Ende des Dampfrohrs 6 ist dabei eine Schaumdüse 8 angeordnet (vgl. Figur 1), welche den Aufschäumvorgang unterstützt. Das Dampfrohr 6 selbst kann dabei flexibel oder in der Art eines starren Rohres ausgebildet sein, welches beispielsweise leicht abgewinkelt am Grundkörper 7 der Dampfdüse 5 drehbar angeordnet ist. Der Grundkörper 7 der Dampfdüse 5 besitzt zu einem Pad oder einer Kapsel äquivalente Kontaktflächen 9, die mit Dichtungskonturen 10 im Brühkopf 2 zusammenwirken. Die Kontaktflächen 9 bzw. Dichtungskonturen 10 sind dabei vorzugsweise derart ausgestaltet, dass das Einlegen der Dampfdüse 5 in den Brühkopf 2 identisch zum Einlegen einer Kaffeekapsel bzw. eines Kaffeepads erfolgen kann.

Ebenso vorgesehen sein kann eine Erfassungseinrichtung 11, über welche die Anwesenheit der Dampfdüse 5 im Brühkopf erfassbar ist. Die Erfassungseinrichtung 11 kann beispielsweise als Barcodescanner, als Mikroschalter oder als RFID-Scanner ausgebildet sein, wobei dann an der Dampfdüse 5 entsprechend ein Barcode, ein RFID-Chip oder ähnliches angeordnet ist.

Um das Reinigen der Dampfdüse 5 vergleichsweise einfach zu ermöglichen, ist das Dampfrohr 6 leicht vom Grundkörper 7 der Dampfdüse 5 abnehmbar. Darüber hinaus ist es auch denkbar, die Dampfdüse 5 als separates Zubehörteil anzubieten, so dass der Kunde prinzipiell die Wahl zwischen einem Kaffeeautomaten 1 mit oder ohne Dampfdüse 5 hat. Auch eine Nachrüstung ist damit vergleichsweise einfach möglich. Die Verwendung der Dampfdüse 5 ist - wie oben beschrieben - äußerst einfach, wobei die Dampferzeugung über das ohnehin am Kaffeeautomaten 1 angeordnete User-Interface gesteuert wird. beispielsweise über eine Start-/Stopptaste. Eine Beheizung erfolgt über das dem Kaffeeautomaten 1 eigene Heizsystem. Nach Gebrauch kann die Dampfdüse 5 wahlweise am Kaffeeautomaten 1 zur Aufbewahrung befestigt, in diesen verstaut oder separat aufbewahrt werden.

Mit dem erfindungsgemäßen Kaffeeautomaten 1 bzw. mit der erfindungsgemäßen Dampfdüse 5 kann ein kompaktes Gerätedesign erreicht werden, wobei ein bisher bekanntes und gewohntes Bedienkonzept beibehalten werden kann, so dass sich der Benutzer bzw. die Benutzerin nicht umstellen muss. Außerdem kann die Dampfdüse 5 vergleichsweise kostengünstig produziert werden und besitzt eine einfache und gute Reinigungsmöglichkeit.

### Bezugszeichenliste

- 1: Kaffeeautomat
- 2: Brühkopf
- 3: Schwenkachse
- 4: Auslauföffnung
- 5: Dampfdüse
- 6: Dampfrohr
- 7: Grundkörper
- 8: Schaumdüse
- 9: Kontaktflächen
- 10: Dichtungskonturen
- 11: Erfassungseinrichtung

## Patentansprüche

1. Kaffeeautomat (1) mit einem Brühkopf (2) zur Aufnahme eines Pads oder einer Kapsel, wobei der Brühkopf (2) zum Einlegen und zur Entnahme des Pads bzw. der Kapsel geöffnet werden kann, und mit einer Auslauföffnung (4) zur Ausgabe von Kaffee, wobei eine in den Brühkopf (2) einlegbare Dampfdüse (5) mit einem Dampfrohr (6) vorgesehen ist, wobei die Dampfdüse (5) einen pad- oder kapselförmigen Grundkörper (7) aufweist, mit welchem sie wie ein Pad oder eine Kapsel in den Brühkopf (2) einlegbar ist und wobei bei geschlossenem Brühkopf (2) das Dampfrohr (6) über die Auslauföffnung (4) nach außen geführt ist, **dadurch gekennzeichnet, dass** am freien Ende des Dampfrohrs (6) eine Schaumdüse (8) angeordnet ist.

2. Kaffeeautomat nach Anspruch 1, **dadurch gekennzeichnet, dass** das Dampfrohr (6) drehbar am Grundkörper (7) angeordnet ist.

3. Kaffeeautomat nach einem der Ansprüche 1 bis 2, **dadurch gekennzeichnet, dass** der Grundkörper (7) der Dampfdüse (5) zu einem Pad oder einer Kapsel äquivalente Kontaktflächen (9) aufweist, die mit Dichtungskonturen (10) im Brühkopf (2) zusammenwirken.

4. Kaffeeautomat nach einem der vorhergehenden Ansprüche, **dadurch gekennzeichnet, dass** eine Erfassungseinrichtung (11) vorgesehen ist, über welche die Anwesenheit der Dampfdüse (5) im Brühkopf (2) erfassbar ist.

5. Kaffeeautomat nach Anspruch 4, **dadurch gekennzeichnet, dass** Erfassungseinrichtung (11) als Barcodescanner, als Mikroschalter oder als RFID-Scanner ausgebildet ist, wobei an der Dampfdüse (5) entsprechend ein Barcode, ein RFID-Chip o.ä. angeordnet ist.

6. Kaffeeautomat nach einem der vorhergehenden Ansprüche, **dadurch gekennzeichnet, dass** das Dampfrohr (6) vom Grundkörper (7) abnehmbar ist.

7. Dampfdüse (5) für einen Kaffeeautomat (1) nach einem der vorhergehenden Ansprüche, mit einem pad- oder kapselförmigen Grundkörper (7) und einem daran drehbar angeschlossenen und abnehmbaren Dampfrohr (6), **dadurch gekennzeichnet, dass** am freien Ende des Dampfrohrs (6) eine Schaumdüse (8) angeordnet ist.

8. Dampfdüse nach Anspruch 7, **dadurch gekennzeichnet, dass** der Grundkörper (7) der Dampfdüse (5) zu einem Pad oder einer Kapsel äquivalente Kontaktflächen (9) aufweist, und/oder dass an der Dampfdüse (5) ein Barcode, ein RFID-Chip o.ä. angeordnet ist.

## Claims

1. Coffee machine (1) with a brewing head (2) for receiving a pad or a capsule, wherein the brewing head (2) can be opened in order to insert and remove the pad or the capsule, and with an outlet opening (4) for dispensing coffee, wherein a steam nozzle (5) which can be inserted into the brewing head (2) is provided with a steam tube (6), wherein the steam nozzle (5) has a pad or capsule-shaped base body (7), with which it is able to be inserted into the brewing head (2) in a similar manner to a pad or a capsule, and wherein, when the brewing head (2) is closed, the steam tube (6) is guided outward via the outlet opening (4), **characterised in that** a foam nozzle (8) is arranged at the free end of the steam tube (6).

2. Coffee machine according to claim 1, **characterised in that** the steam tube (6) is arranged on the base body (7) in a rotatable manner.

3. Coffee machine according to one of claims 1 to 2, **characterised in that** the base body (7) of the steam nozzle (5) has contact surfaces (9) which are equivalent to a pad or a capsule and which work together with sealing contours (10) in the brewing head (2).

4. Coffee machine according to one of the preceding claims, **characterised in that** a detection facility (11) is provided, by way of which the presence of the steam nozzle (5) in the brewing head (2) is able to be detected.

5. Coffee machine according to claim 4, **characterised in that** detection facility (11) is embodied as a barcode scanner, as a microswitch or as an RFID scanner, wherein a barcode, an RFID chip or the like is accordingly arranged on the steam nozzle (5).

6. Coffee machine according to one of the preceding claims, **characterised in that** the steam tube (6) is able to be detached from the base body (7).

7. Steam nozzle (5) for a coffee machine (1) according to one of the preceding claims, with a pad or capsule-shaped base body (7) and a steam tube (6) which is able to be connected thereto and detached in a rotatable manner, **characterised in that** a foam nozzle (8) is arranged at the free end of the steam tube (6).

8. Steam nozzle according to claim 7, **characterised in that** the base body (7) of the steam nozzle (5) has contact surfaces (9) which are equivalent to a pad or a capsule, and/or that a barcode, an RFID-chip or the like is arranged on the steam nozzle (5).

## Revendications

1. Machine à café comportant une tête de percolation (2) destinée à recevoir une dosette ou une capsule, dans laquelle la tête de percolation (2) peut être ouverte pour insérer et enlever la dosette ou la capsule, et une ouverture de sortie (4) pour délivrer du café, dans laquelle une buse à vapeur (5) insérable dans la tête de percolation (2) et comportant un tube à vapeur (6) est prévue, et la buse à vapeur (5) possède un corps de base (7) en forme de dosette ou de capsule avec lequel elle peut être insérée dans la tête de percolation (2) de la même manière qu'une dosette ou qu'une capsule, et dans laquelle le tube à vapeur (6) est guidé vers l'extérieur via l'ouverture de sortie (4) lorsque la tête de percolation (2) est fermée,
**caractérisée en ce qu'**une buse de moussage (8) est disposée à l'extrémité libre du tube à vapeur (6).

2. Machine à café selon la revendication 1, **caractérisée en ce que** le tube à vapeur (6) est agencé de façon rotative sur le corps de base (7).

3. Machine à café selon l'une des revendications 1 à 2, **caractérisée en ce que** le corps de base (7) de la buse à vapeur (5) comporte des surfaces de contact (9) équivalentes à une dosette ou à une capsule, qui coopèrent avec des contours de joint (10) dans la tête de percolation (2).

4. Machine à café selon l'une des revendications précédentes, **caractérisée en ce qu'**un dispositif de détection (11) est prévu, par lequel la présence de la buse à vapeur (5) dans la tête de percolation (2) peut être détectée.

5. Machine à café selon la revendication 4, **caractérisée en ce que** le dispositif de détection (11) est conçu sous forme d'un lecteur de code à barres, d'un micro-commutateur ou d'un lecteur RFID, et dans lequel, de façon correspondante, un code à barres, une puce RFID ou un élément similaire est agencé sur la buse à vapeur (5).

6. Machine à café selon l'une des revendications précédentes, **caractérisée en ce que** le tube à vapeur (6) peut être démonté du corps de base (7).

7. Buse à vapeur (5) pour une machine à café (1) selon l'une des revendications précédentes, comportant un corps de base (7) en forme de dosette ou de capsule et un tube à vapeur (6) amovible connecté de façon rotative à celui-ci, **caractérisé en ce qu'**une buse de moussage (8) est disposée à l'extrémité libre du tube à vapeur (6).

8. Buse à vapeur selon la revendication 7, **caractérisée en ce que** le corps de base (7) de la buse à vapeur (5) possède des surfaces de contact (9) équivalentes à une dosette ou à une capsule et/ou **en ce qu'**un code à barres, une puce RFID ou un élément similaire est agencé sur la buse à vapeur (5).
